# EUROPÄISCHE PATENTANMELDUNG

(11) **EP 0 526 958 A1**
(43) Veröffentlichungstag der Anmeldung: **10.02.1993**
(21) Anmeldenummer: 92250196.0
(22) Anmeldetag: 29.07.1992
(51) Int. Cl.: H02B 13/035

(54) **Gekapselte Schaltanlage**

(30) Priorität: 05.08.1991 DE 9109811 U
(71) Anmelder: SIEMENS AKTIENGESELLSCHAFT, D-80333 München (DE)
(72) Erfinder: Lorenz, Dieter, W-1000 Berlin 45 (DE)

(57) **Zusammenfassung**

Bei einer gekapselten Schaltanlage werden ein Trennschalter (1) und ein Leistungsschalter (21) derart angeordnet, daß ihre Längsachsen parallel zueinander verlaufen und die freien Schenkel eines "U" bilden. Der Trennschalter (1) weist feststehende Kontaktstücke (9,10) auf, von denen Leiter (7,8) ausgehen, die senkrecht zur Längsachse des Kapselungsgehäuses des Trennschalters durch Flansche durchgeführt sind. Ein erster Flansch (22) ist mit dem Leistungsschalter (21) über ein weiteres Trennschalterkapselungsgehäuse verbunden. Ein zweiter Flansch (23) ist mit der Kapselung einer das "U" durchsetzenden Sammelschiene (19) verbunden.

## Beschreibung

Die Erfindung bezieht sich auf eine gekapselte Schaltanlage, enthaltend einen Trennschalter mit einem Kapselungsgehäuse und zwei in dessen Längsachse angeordneten, feststehenden Kontaktstücken sowie zwei mit je einem der Kontaktstücke verbundenen, senkrecht zur Längsachse des Kapselungsgehäuses durch einen ersten und einen zweiten Flansch an dessen mantelseitiger Wand durchgeführten Leitern, wobei die Flansche an derselben Seite des Kapselungsgehäuses liegen.

Ein Trennschalter mit einem Kapselungsgehäuse und zwei in dessen Längsachse angeordneten Kontaktstücken sowie zwei mit je einem der Kontaktstücke verbundenen senkrecht zur Längsachse des Kapselungsgehäuses durch dessen mantelseitige Wand durchgeführten Leitern ist beispielsweise aus der EP-0 058 402 B1 bekannt. Bei dem dort (vgl. Figur 8) dargestellten Trennschalter sind die feststehenden Kontaktstücke einerseits jeweils mit den Leitern verbunden, andererseits an den Stirnseiten des Kapselungsgehäuses durch Isolatoren abgestützt.

Aus der EP 0 150 131 B1 ist ein Trennschalter für eine gekapaselte Schaltanlage gemäß dem Oberbegriff des Patentanspruchs 1 bekannt, bei dem die feststehenden Kontaktstücke ausschließlich durch die Leiter gestützt sind.

Der Erfindung liegt die Aufgabe zugrunde, bei einer Schaltanlage der eingangs genannten Art die Baugröße bei guter Zugänglichkeit aller Bauteile zu verringern und eine einfache Montage zu gewährleisten.

Die Aufgabe wird erfindungsgemäß dadurch gelöst, daß der erste der Flansche mit dem Kapselungsgehäuse eines Leistungsschalters derart verbunden ist, daß die beiden Schalter die Schenkel eines "U" bilden und daß die Schalter eine das "U" durchsetzende Sammelschiene zwischen sich aufnehmen, deren Kapselung mit dem zweiten Flansch verbunden ist.

Dadurch ergibt sich eine Reduzierung der Ausmaße der Schaltanlage. Die Sammelschiene hat in dem Zwischenraum zwischen den Schaltern einen geringen Platzbedarf und bleibt dennoch für den Wartungsfall leicht zugänglich.

Die Erfindung kann vorteilhaft dadurch ausgestaltet werden, daß zum Antrieb eines beweglichen Kontaktstückes des Trennschalters ein im Bereich der mantelseitigen Wand des Kapselungsgehäuses schwenkbar gelagerter Antriebshebel vorgesehen ist.

Durch diese Konstruktion ist ein in der Längsachse des Kapselungsgehäuses geringer Platzbedarf des Trennschalters realisiert. Der Antriebshebel ist vorteilhaft in einem an die mantelseitige Wand des Kapselungsgehäuses angeflanschten oder angegossenen Gehäuse gelagert. Ein angegossenes Gehäuse ist bei der Herstellung der Kapselung sehr kostengünstig und es brauchen keine Maßnahmen zur Herstellung einer dichten Flanschverbindung zwischen dem Gehäuse und der Kapselung vorgesehen zu sein. Wird das Gehäuse angeflanscht, so ergibt sich insbesondere ein geringer Montageaufwand bei der Montage der Antriebsmechanik.

Die Erfindung bezieht sich außerdem auf eine gekapselte Schaltanlage mit einem oder mehreren Trennschaltern der oben beschriebenen Art, bei der die Trennschalter derart angeordnet sind, daß die Leiter horizontal aus den Kapselungsgehäusen herausgeführt und durch vertikal angeordnete Stützisolatoren gestützt sind.

Durch diesen Aufbau kann die Schaltanlage ganz oder wenigstens weitgehend frei von horizontal liegenden Stützisolatoren gestaltet werden. Dadurch wird der Gefahr entgegengewirkt, daß durch Niederschlag von Dämpfen oder Stäuben oder durch in der Schaltanlage befindliche Partikel und deren Ablagerung auf einem horizontal liegenden Isolator die Isolierung zwischen den stomführenden Teilen und dem auf Erdpotential liegenden Kapselungsgehäuse verschlechtert wird.

Im folgenden wird die Erfindung anhand eines Ausführungsbeispiels in einer Zeichnung gezeigt und anschließend beschreiben.

Dabei zeigt
Figur 1 einen erfindungsgemäßen Trennschalter schematisch in einem Längsschnitt,
Figur 2 eine Schaltanlage mit mehreren Trennschaltern gemäß der Erfindung (schematisch).

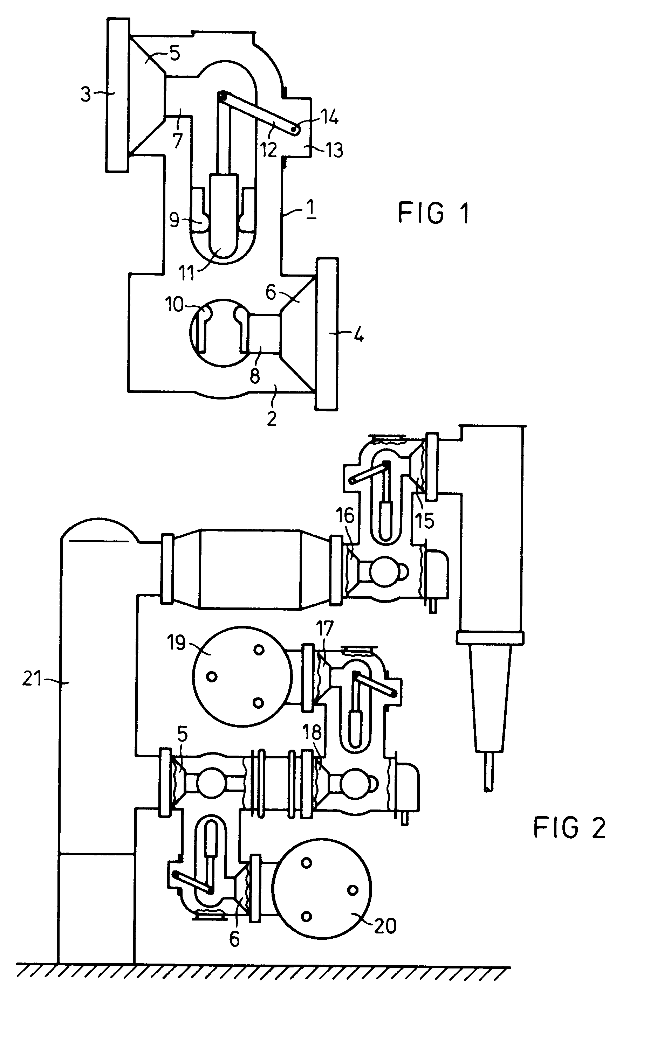

Figur 1 zeigt einen erfindungsgemäßen Trennschalter la mit einem Kapselungsgehäuse 2 und zwei Anschlußflanschen 3, 4 zum Anschluß an eine gekapselte Schaltanlage. Der Trennschalter 1 (Fig. 2) ist im wesentlichen gleich aufgebaut, mit dem Unterschied, daß bei diesem die Anschlußflansche 22,23 auf derselben Seite des Kapselungsgehäuses liegen. Es sind Stützisolatoren 5, 6 vorgesehen, die das Kapselungsgehäuse 2 gasdicht abschließen und die Leiter 7, 8 abstützen. An den Leitern 7, 8 sind feststehende Kontaktstücke 9, 10 tragend befestigt. Ein bewegliches Kontaktstück in Form eines Schaltstiftes 11 wird mittels eines Antriebshebels 12 angetrieben. Der Antriebshebel 12 ist im Bereich der Kapselungswand schwenkbar in einem angeflanschten Gehäuse 13 gelagert. Zur Ankopplung eines Antriebes ist eine Welle 14 durch eine gasdichte Drehdurchführung aus dem angeflanschten Gehäuse herausgeführt. Beim Einschalten treibt der Antriebshebel 14 den Schaltstift 11 in axialer Richtung an und der Schaltstift 11 überbrückt die Trennstrecke zwischen den feststehenden Kontaktstücken 9, 10.

Figur 2 zeigt eine erfindungsgemäße Schaltanlage, in die drei Trennschalter nach Art des in Figur 1 dargestellten Schalters so eingebaut sind, daß die Stützisolatoren 5, 6; 15, 16, 17, 18 vertikal stehen. Die Schaltanlage verfügt weiter über eine Leistungsschaltereinheit 21, deren Durchführungen ebenfalls horizontal liegen, so daß die entsprechenden Stützisolatoren auch dort vertikal liegen. Der Flansch 22 des Kapselungsgehäuses des Trennschalters 1 ist über ein weiteres Trennschaltergehäuse mit dem Leistungsschalter 21 und der Flansch 23 ist mit der Kapselung der Sammelschiene 19 verbunden. Durch die Form der Trennschalter und durch die Platzersparnis in axialer Richtung der Trennschalter wegen der Art des Antriebs über Antriebshebel 12 können die Sammelschienenstränge 19, 20 der Schaltanlage dicht nebeneinander platzsparend angeordnet werden. Das ganze Schaltfeld der Schaltanlage kann somit zur Erzielung einer Platzersparnis zusammengerückt werden. Dennoch sind die Sammelschienen, insbesondere auch die Sammelschiene 19, durch einfaches Abmontieren des Trennschalters 1 leicht zugänglich.

## Patentansprüche

1. Gekapselte Schaltanlage, enthaltend einen Trennschalter mit einem Kapselungsgehäuse und zwei in dessen Längsachse angeordneten, feststehenden Kontaktstücken sowie zwei mit je einem der Kontaktstücke verbundenen, senkrecht zur Längsachse des Kapselungsgehäuses durch einen ersten und einen zweiten Flansch an dessen mantelseitiger Wand durchgeführten Leitern, wobei die Flansche an derselben Seite des Kapselungsgehäuses liegen, dadurch gekennzeichnet, daß der erste der Flansche mit dem Kapselungsgehäuse eines Leistungsschalters derart verbunden ist, daß die beiden Schalter die Schenkel eines "U" bilden und daß die Schalter eine das "U" durchsetzende Sammelschiene zwischen sich aufnehmen, deren Kapselung mit dem zweiten Flansch verbunden ist.

2. Schaltanlage nach Anspruch 1,
dadurch gekennzeichnet, daß zum Antrieb eines beweglichen Kontakstückes des Trennschalters ein im Bereich der mantelseitigen Wand des Kapselungsgehäuses (2) schwenkbar gelagerter Antriebshebel (12) vorgesehen ist.

3. Schaltanlage nach Anspruch 1 oder 2,
dadurch gekennzeichnet, daß der Antriebshebel (12) in einem an die mantelseitige Wand angeflanschten oder angegossenen Gehäuse (13) gelagert ist.

4. Schaltanlage mit einem oder mehreren Trennschaltern nach einem der verhergehenden Ansprüche,
dadurch gekennzeichnet, daß die Trennschalter (1) derart angeordnet sind, daß die Leiter (7, 8) horizontal aus den Kapselungsgehäusen herausgeführt und durch vertikal angeordnete Stützisolatoren (5, 6; 15, 16, 17, 18) gestützt sind.
